# EUROPÄISCHE PATENTSCHRIFT

(11) **EP 1 918 084 B1**
(45) Veröffentlichungstag und Bekanntmachung des Hinweises auf die Patenterteilung: **14.12.2011**
(21) Anmeldenummer: 07450184.2
(22) Anmeldetag: 18.10.2007
(51) Int. Cl.: B29C 47/10, B29B 17/00, B02C 17/14, B01F 13/10

(54) **Vorrichtung zum Aufbereiten von thermoplastischem Kunststoffmaterial**
Device for processing thermoplastic materials
Dispositif de préparation de matière synthétique thermoplastique

(30) Priorität: 30.10.2006 AT 18192006
(43) Veröffentlichungstag der Anmeldung: 07.05.2008
(73) Patentinhaber: Next Generation Recyclingmaschinen GmbH, 4101 Feldkirchen (AT)
(72) Erfinder: Barth, Gerold, 4073 Wilhering (AT); Hochreiter, Josef, 4240 Freistadt (AT); Kroiss, Günter, 4061 Pasching (AT); Pichler, Thomas, 4171 St. Peter am Wimberg (AT); Schmedler, Walter, 4600 Wels (AT)
(74) Vertreter: Hehenberger, Reinhard

(56) Entgegenhaltungen:
- WO-A-01/39948
- WO-A-88/02684
- WO-A-2004/108379
- DE-A1- 3 525 554
- US-A- 5 988 865

## Beschreibung

Die Erfindung betrifft Vorrichtung zum Aufbereiten von thermoplastischem Kunststoffmaterial mit einer Zerkleinerungseinrichtung zum Zerkleinern des Kunststoffmaterials und mit einem Extruder, wobei die Zerkleinerungseinrichtung einen Zylinder mit einer Zuführöffnung und mit einer Messerwelle aufweist, wobei der Extruder eine Extruderschnecke in einem Schneckenrohr aufweist, wobei der Zylinder der Zerkleinerungseinrichtung über eine Verbindungsöffnung mit dem Schneckenrohr des Extruders verbunden ist, und wobei die Erzeugenden der Innenwand des Zylinders und der Innenwand des Schneckenrohrs im Bereich der Verbindungsöffnung einander tangieren oder geringfügig überschneiden.

Eine derartige Vorrichtung ist aus der AT 407 234 B, der US 5 988 865 A und der WO 2004/108379 A bekannt. Diese bekannten Vorrichtungen weisen den Vorteil auf, dass durch die direkte, sehr kurze Verbindung zwischen Zerkleinerungseinrichtung und Extruder einerseits die ständige Zuführung von Kunststoffmaterial sichergestellt ist und andererseits der thermische Wirkungsgrad sehr gut ist, da die Zerkleinerungsenergie der Zerkleinerungseinrichtung direkt in den Extrusionsprozess eingebracht wird.

Aus der WO 01/39948 A ist eine Vorrichtung zum Aufbereiten von thermoplastischem Kunststoffmaterial mit einer Zerkleinerungseinrichtung zum Zerkleinern des Kunststoffmaterials und mit einem Extruder, wobei die Zerkleinerungseinrichtung einen Zylinder mit einer Zuführöffnung und mit einer Messerwelle aufweist, wobei der Extruder eine Extruderschnecke in einem Schneckenrohr aufweist, und wobei der Zylinder der Zerkleinerungseinrichtung über eine Verbindungsöffnung mit dem Schneckenrohr des Extruders verbunden ist, bekannt, bei der die Verbindungsöffnung asymmetrisch angeordnet ist.

Da sich in Einzelfällen im Bereich der Verbindungsöffnung zwischen der Zerkleinerungseinrichtung und dem Schneckenrohr des Extruders Material ansammeln kann, welches insbesondere bei Kunststoffmaterial mit einem niedrigen Schmelz- oder Erweichungspunkt, das durch den vorhergehenden Zerkleinerungsprozess zumindest oberflächlich eingeschmolzen oder erweicht wurde, in der Verbindungsöffnung festgesetzt und diese zunehmend verkleinert liegt der Erfindung die Aufgabe zu Grunde, eine Vorrichtung der eingangs genannten Gattung zur Verfügung zu stellen, welche bei diesem Problem Abhilfe schafft.

Gelöst wird diese Aufgabe mit einer Vorrichtung mit den Merkmalen des Patentanspruchs 1.

Es hat sich herausgestellt, dass die Wandstärke des Zylinders der Zerkleinerungseinrichtung beziehungsweise des Schneckenrohrs des Extruders im Bereich der Verbindungsöffnung für das Festesetzen des Kunststoffmaterials von entscheidender Bedeutung ist. Auf der anderen Seite ist es aus konstruktiven Gründen nicht ohne weiteres möglich, die Wandstärke auf ein Maß zu reduzieren, bei welchem zuverlässig vermieden werden kann, dass sich Material in der Verbindungsöffnung dauerhaft angelegt. Durch die asymmetrische Anordnung der Verbindungsöffnung lässt sich dieses Problem minimieren, da die Wandstärke am Rand der Verbindungsöffnung im Bereich der Ebene, welche in der Drehachse der Messerwelle und im rechten Winkel zur Drehachse der Extruderschnecke liegt, viel kleiner gestaltet werden kann.

Da die Erzeugenden der Innenwand des Zylinders und der Innenwand des Schneckenrohrs im Bereich der Verbindungsöffnung einander tangieren oder geringfügig, d.h. einige wenige Millimeter, überschneiden, kann die Wandstärke am Rand der Verbindungsöffnung zusätzlich kleiner gestaltet werden, da der Zylinder der Zerkleinerungseinrichtung und das Schneckenrohr sehr nahe aneinander liegen und die Verbindungsöffnung daher sehr kurz ist.

Je nachdem wie weit die Innenwand des Zylinders der Zerkleinerungseinrichtung und des Schneckenrohrs nebeneinander liegen, kann entweder vorgesehen sein, dass die in Drehrichtung der Messerwelle gesehen der Ebene näher liegende Kante der Verbindungsöffnung abgerundet oder scharf ist. Eine scharfe oder abgerundete Kante kann aber bei größerem Abstand natürlich auch durch entsprechende Bearbeitung des Randes der Verbindungsöffnung hergestellt werden. Durch diese scharfe oder abgerundete, aber schmale Kante kann die Anlagerung von Material sehr gut verhindert werden.

Abhängig vom Durchmesser bzw. der Form der Verbindungsöffnung und deren Exzentrizität kann der Winkel einer Tangentialebene der Innenwand des Zylinders am Rand der Verbindungsöffnung zur Drehachse der Extruderschnecke einen bestimmten Winkel einnehmen. Im Rahmen der Erfindung ist dabei bevorzugt und wenn die Tangentialebene der Innenwand des Zylinders am Rand der Verbindungsöffnung einen Winkel kleiner 30°, vorzugsweise kleiner 20° zur Drehachse der Extruderschnecke einschließt. Besonders bevorzugt ist dabei, wenn die Tangentialebene der Innenwand des Zylinders am Rand der Verbindungsöffnung einen Winkel zwischen 10° und 15° zur Drehachse der Extruderschnecke einschließt. Wenn der Winkel der Tangentialebene in diesen bevorzugten Bereichen liegt, ergibt sich nahezu automatisch eine Kante der Verbindungsöffnung, die ein Anlagern von Material weitgehend vermeidet. Der entgegen der Drehrichtung der Messerwelle gesehen von der Ebene entfernter liegende Rand der Verbindungsöffnung, der somit der vorhin beschriebenen Kante gegenüberliegt, schließt zur Drehachse der Extruderschnecke vorzugsweise einen Winkel kleiner 90°, vorzugsweise kleiner 80°, ein. Dadurch ergibt sich eine Form der Verbindungsöffnung durch welche das Kunststoffmaterials zuverlässig in einem ausreichenden Ausmaß zum Extruder zugeführt wird, so dass dieser immer mit ausreichend Kunststoffmaterial beschickt wird.

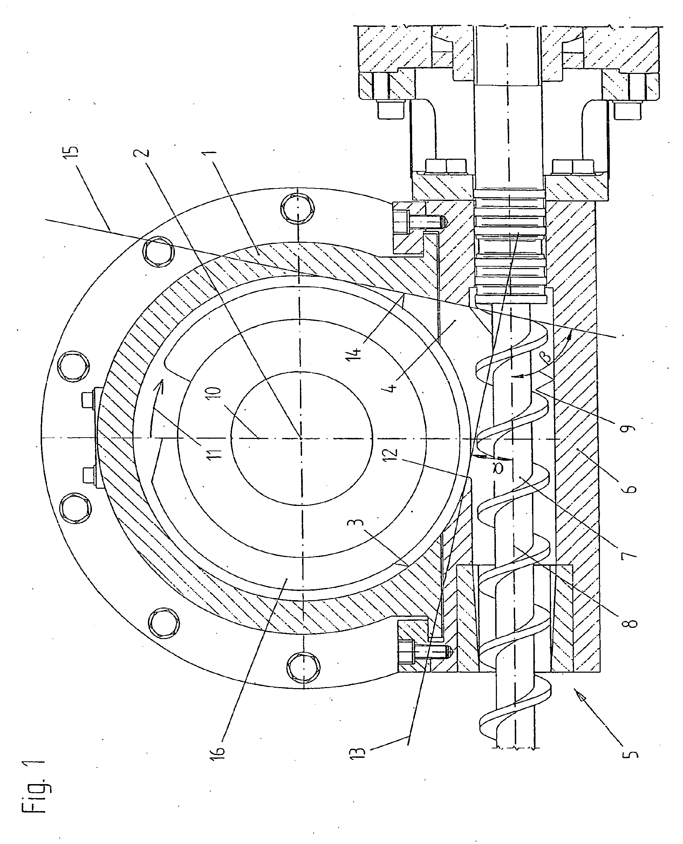

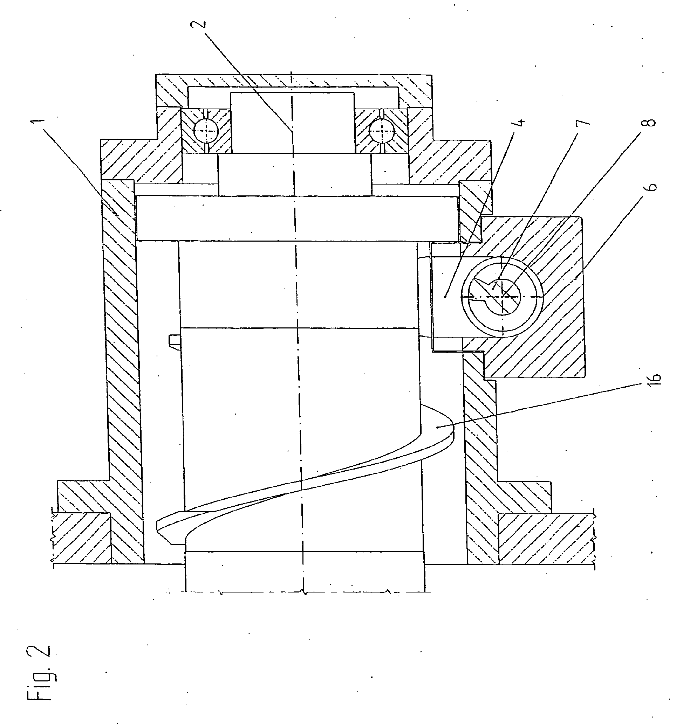

Weitere Merkmale und Vorteile der erfindungsgemäßen Vorrichtung ergeben sich aus der nachfolgenden Beschreibung einer bevorzugten Ausführungsform der Erfindung unter Bezugnahme auf die angeschlossenen Zeichnungen. Es zeigt Fig. 1 einen Schnitt durch eine erfindungsgemäße Vorrichtung im Bereich der Verbindungsöffnung zwischen der Zerkleinerungseinrichtung und dem Extruder, der in der Achse der Extruderwelle liegt, und Fig. 2 einen Schnitt im selben Bereich in der Ebene der Zerkleinererwelle.

Eine erfindungsgemäße Vorrichtung weist, wie dies an sich aus der AT 407 234 B bekannt ist, eine Zerkleinerungseinrichtung auf, von der in dem Zeichnungen allerdings nur der Zylinder 1 dargestellt ist. Eine Messerwelle, die beispielsweise die aus der AT 407 234 B bekannte Form aufweisen kann, ist durch ihre Wellenachse 2 symbolisiert. In den Zylinder 1 wird durch eine in den Zeichnungen nicht dargestellte Zuführöffnung zu zerkleinerndes Kunststoffmaterial zugeführt. Der Zylinder 1 hat eine Innenwand 3, welche eine Verbindungsöffnung 4 aufweist, die eine Verbindung zu einem Extruder 5, genauer gesagt zum Schneckenrohr 6 des Extruders 5, herstellt. Der Extruder 5 weist, wie ebenfalls an sich bekannt eine Extruderschnecke 7 auf, welche um eine Drehachse 8 gedreht und von einem Motor angetrieben wird.

Die Innenwand 3 des Zylinders 1 und die Innenwand 9 des Schneckenrohrs 6 sind im Bereich der Verbindungsöffnung 4 so zueinander angeordnet, dass die Wellenachse 2 und die Drehachse 8 der Extruderschnecke 7 übereinander angeordnet sind und einander im rechten Winkel kreuzen, und dass andererseits die unterste Erzeugende der Innenwand 3 und die oberste Erzeugende der Innenwand 9 einander tangieren. Auf diese Weise können die Messerwelle bzw. eine in deren Verlängerung angeordnete Förderschnecke 16, deren Konstruktion wie aus der AT 407 234 B bekannt ausgeführt sein kann, die über der Verbindungsöffnung 4 angeordnet ist, sowie die unter der Verbindungsöffnung 4 angeordnete Extruderschnecke 7 sehr nahe aneinander angeordnet sein, was für die Zufuhr des Kunststoffmaterials in den Extruder 5 wichtig ist. Es ist allerdings für die Erfindung keine Voraussetzung, dass sich die Wellenachse 2 und die Drehachse 8 im rechten Winkel kreuzen, sondern dieser Winkel kann auch von 90° unterschiedlich sein.

Die Verbindungsöffnung 4 ist bezüglich einer Ebene 10, die in der Drehachse 2 der Messerwelle und im rechten Winkel zur Drehachse 8 der Extruderschnecke 7 liegt (wenn sich die Wellenachse 2 und die Drehachse 8 nicht im rechten Winkel kreuzen und die Drehachse nicht in der Bildebene der Zeichnung liegt, dann liegt diese Ebene 10 im rechten Winkel zur Projektion der Wellenachse 8 in die Bildebene), derart asymmetrisch angeordnet, dass sie bezüglich der Drehrichtung 11 der Messerwelle gegen diese Drehrichtung 11 verschoben ist. Dies hat zur Folge, dass der in Drehrichtung 11 gesehen vordere Rand der Verbindungsöffnung 4 eine Kante 12 bildet, die relativ schmal ist. Im dargestellten Ausführungsbeispiel ist die Kante 12 abgerundet. Die Kante 12 könnte aber auch durch entsprechende Bearbeitung scharf oder annähernd scharf sein. Durch diese schmale, abgerundete oder scharfe Kante 12 wird verhindert, dass sich in der Verbindungsöffnung 4 im Bereich dieser Kante 12 Kunststoffmaterial angelagert, das durch die Drehrichtung 11 der Messerwelle oder Förderschnecke bedingt mit hohem Druck und teilweise plastifiziert bzw. oberflächlich angeschmolzen gegen diese Kante 12 gepresst wird.

Abhängig von der Geometrie der Verbindungsöffnung 4, dem Durchmesser der Innenwand 3 und dem Abstand der Kante 12 von der Ebene 10 nimmt eine Tangentialebene 13 der Innenwand 3 des Zylinders 1 am Rand der Verbindungsöffnung 4 im Bereich der Kante 12 einen bestimmten Winkel α zur Drehachse 8 der Extruderwelle 7 ein. Im Rahmen der Erfindung ist dieser Winkel α kleiner als 40°, da sich dadurch eine Form der Kante 12 ergibt, die ein Anlagern von Kunststoffmaterials erschwert. Noch besser ist allerdings, wenn der Winkel α kleiner als 30°, bevorzugt kleiner 20° und besonders bevorzugt zwischen 10° und 15° liegt. Je kleiner nämlich der Winkel α ist, um so spitzer ist die Kante 12 und umso eher wird vermieden, dass sich Kunststoffmaterial an der Kante 12 angelagert. Kleinere Winkel α wären natürlich auch möglich, jedoch könnte sich dann unter Umständen ein Festigkeitsproblem an der Kante 12 ergeben.

An jenem Rand, welcher der Kante 12 gegenüber liegt, weist die Verbindungsöffnung 4 eine gekrümmte Wand 14 auf, deren Tangentialebene 15 in einem Winkel β zur Drehachse 8 der Extruderschnecke 7 angeordnet ist. Im Rahmen der Erfindung ist bevorzugt, wenn dieser Winkel β gleich oder kleiner als 90°, vorzugsweise zwischen 70° und 80° ist. Bei einem derartigen Winkel der Wand 14 erfolgt eine sehr zuverlässige Zufuhr des Kunststoffmaterials zum Extruder 5.

Die Verbindungsöffnung 4 weist bevorzugt eine etwa elliptische Form auf, bei der die längere Achse in Drehrichtung 11 der Zerkleinererwelle ausgerichtet ist. Die Verbindungsöffnung 4 könnte aber auch jede andere Form aufweisen, beispielsweise eine kreisrunde oder annähernd kreisrunde Form oder eine etwa elliptische Form, bei der die Längsachse quer oder in einem Winkel ungleich 90° zur Drehachse 2 ausgerichtet ist.

## Patentansprüche

1. Vorrichtung zum Aufbereiten von thermoplastischem Kunststoffmaterial mit einer Zerkleinerungseinrichtung zum Zerkleinern des Kunststoffmaterials und mit einem Extruder (5), wobei die Zerkleinerungseinrichtung einen Zylinder (1) mit einer Zuführöffnung und mit einer Messerwelle aufweist, wobei der Extruder (5) eine Extruderschnecke (7) in einem Schneckenrohr (6) aufweist, wobei der Zylinder (1) der Zerkleinerungseinrichtung über eine Verbindungsöffnung (4) mit dem Schneckenrohr (6) des Extruders (5) verbunden ist, und wobei die Erzeugenden der Innenwand (3) des Zylinders (1) und der Innenwand (9) des Schneckenrohrs (6) im Bereich der Verbindungsöffnung (4) einander tangieren oder geringfügig überschneiden, **dadurch gekennzeichnet, dass** die Verbindungsöffnung (4) mit Bezug zu einer Ebene (10), welche in der Drehachse (2) der Messerwelle und im rechten Winkel zur Drehachse (8) der Extruderschnecke (7) liegt, sich in der Drehrichtung (11) der Messerwelle gesehen asymmetrisch auf beide Seiten der Ebene (10)erstreckt, so dass die in Drehrichtung (11) der Messerwelle gesehen vordere Kante (12) der Verbindungsöffnung (4) der Ebene (10) näher liegt als der dieser Kante (12) gegenüberliegende Rand der Verbindungsöffnung (4), und dass eine Tangentialebene (13) der Innenwand (3) des Zylinders (1) an der Kante (12) der Verbindungsöffnung (4) einen Winkel (α) kleiner 40° zur Drehachse der Extruderschnecke einchließt.

2. Vorrichtung nach Anspruch 1, **dadurch gekennzeichnet, dass** die in Drehrichtung (11) der Messerwelle gesehen der Ebene (10) näher liegende Kante (12) der Verbindungsöffnung (4) abgerundet oder scharf ist.

3. Vorrichtung nach Anspruch 1 oder 2, **dadurch gekennzeichnet, dass** die Tangentialebene (13) der Innenwand (3) des Zylinders (1) an der Kante (12) der Verbindungsöffnung (4) einen Winkel (α) kleiner 30°, vorzugsweise kleiner 20° zur Drehachse (8) der Extruderschnecke (7) einschließt.

4. Vorrichtung nach einem der Ansprüche 1 bis 3, **dadurch gekennzeichnet, dass** die Tangentialebene (13) der Innenwand (3) des Zylinders (1) am Rand (12) der Verbindungsöffnung (4) einen Winkel (α) zwischen 10° und 15° zur Drehachse (8) der Extruderschnecke (7) einschließt.

5. Vorrichtung nach einem der Ansprüche 1 bis 4, **dadurch gekennzeichnet, dass** der Rand der Verbindungsöffnung (4), der entgegen der Drehrichtung (11) der Messerwelle liegt und von der Ebene (10) entfernter liegt, eine Wand (14) bildet, die zur Drehachse (8) der Extruderschnecke (7) einen Winkel (β) gleich oder kleiner 90°, vorzugsweise kleiner 80°, einschließt.

## Claims

1. A device for processing thermoplastic plastic material having a milling means for milling the plastic material and having an extruder (5), the milling means having a cylinder (1) having a feed opening and having a cutter shaft, the extruder (5) having an worm screw (7) in a worm casing (6), the cylinder (1) of the milling means being connected via a connecting opening (4) to the worm casing (6) of the extruder (5), and the generatices of the inner wall (3) of the cylinder (1) and the inner wall (9) of the worm casing (6) being tangent to one another or slightly overlapping one another in the area of the connecting opening (4), **characterized in that** the connecting opening (4), in relation to a plane (10), which is located in the rotational axis (2) of the cutter shaft and at a right angle to the rotational axis (8) of the worm screw (7), extends asymmetrically on both sides of the plane (10), so that the front edge (12) of the connecting opening (4), viewed in the rotational direction (11) of the cutter shaft, is closer to the plane (10) than the rim of the connecting opening (4) opposite to this edge (12), and that a tangential plane (13) of the inner wall (3) of the cylinder (1) encloses an angle (α) less than 40° to the rotational axis of the worm screw on the edge (12) of the connection opening (4).

2. The device according to Claim 1, **characterized in that** the edge (12) of the connecting opening (4), which is closer to the plane (10) viewed in the rotational direction (11) of the cutter shaft, is rounded or sharp.

3. The device according to Claim 1 or 2, **characterized in that** the tangential plane (13) of the inner wall (3) of the cylinder (1) encloses an angle (α) less than 30°, preferably less than 20°, to the rotational axis (8) of the worm screw (7) on the edge (12) of the connecting opening (4).

4. The device according to one of Claims 1 to 3, **characterized in that** the tangential plane (13) of the inner wall (3) of the cylinder (1) encloses an angle (α) between 10° and 15° to the rotational axis (8) of the worm screw (7) on the edge (12) of the connecting opening (4).

5. The device according to one of Claims 1 to 4, **characterized in that** the edge of the connecting opening (4), which is opposite to the rotational direction (11) of the cutter shaft and is remote from the plane (10), forms a wall (14), which encloses an angle (β) less than or equal to 90°, preferably less than 80°, with the rotational axis (8) of the worm screw (7).

## Revendications

1. Dispositif pour le traitement d'une matière thermoplastique avec un dispositif de broyage pour broyer la matière plastique, et avec une extrudeuse (5), dans lequel le dispositif de broyage comporte un cylindre (1) avec une ouverture d'alimentation et avec un arbre porte-lames, dans lequel l'extrudeuse (5) comporte une vis d'extrudeuse (7) dans un tuyau de vis (6), dans lequel le cylindre (1) du dispositif de broyage est relié au tuyau de vis (6) de l'extrudeuse (5) par une ouverture de liaison (4), et dans lequel les génératices de la paroi intérieure (3) du cylindre (1) et de la paroi intérieure (9) du tuyau de vis (6) se touchent ou se chevauchent légèrement dans la région de l'ouverture de liaison (4), **caractérisé en ce que** l'ouverture de liaison (4), par rapport à un plan (10) s'étendant dans l'axe de rotation (2) de l'arbre porte-lame et en angle droit par rapport à l'axe de rotation (8) de la vis d'extrudeuse (7), s'étend de façon asymétrique des deux côtés du plan (10), vu dans le sens de rotation (11) de l'arbre porte-lamede sorte que l'arête avant (12) de l'ouverture de liaison (4), vue dans le sens de rotation (11) de l'arbre porte-lame, est plus proche du plan (10) que le bord de l'ouverture de liaison (4) qui est opposé à cette arête (12), et qu'un plan tangentiel (13) de la paroi intérieure (3) du cylindre (1) inclut un angle (α) inférieur à 40° par rapport à l'axe de rotation de la vis d'extrudeuse, sur l'arête (12) de l'ouverture de liaison (4).

2. Dispositif selon la revendication 1, **caractérisé en ce que** l'arête (12) de l'ouverture de liaison (4) plus proche du plan (10) vue dans le sens de rotation (11) de l'arbre porte-lame est arrondie ou aigüe.

3. Dispositif selon la revendication 1 ou 2, **caractérisé en ce que** le plan tangentiel (13) de la paroi intérieure (3) du cylindre (1) inclut un angle (α) inférieur à 30°, de préférence inférieur à 20°, par rapport à l'axe de rotation (8) de la vis d'extrudeuse (7), sur l'arête (12) de l'ouverture de liaison (4).

4. Dispositif selon l'une des revendications 1 à 3, **caractérisé en ce que** le plan tangentiel (13) de la paroi intérieure (3) du cylindre (1) inclut un angle (α) compris entre 10° et 15° par rapport à l'axe de rotation (8) de la vis d'extrudeuse (7), au bord (12) de l'ouverture de liaison (4).

5. Dispositif selon l'une des revendications 1 à 4, **caractérisé en ce que** le bord de l'ouverture de liaison (4), qui s'étend inversement au sens de rotation (11) de l'arbre porte-lame et est plus éloigné du plan (10), forme une paroi (14) incluant un angle (β) égal ou inférieur à 90°, de préférence inférieur à 80°, par rapport à l'axe de rotation (8) de la vis d'extrudeuse (7).
